# EUROPÄISCHE PATENTSCHRIFT

(11) **EP 0 723 330 B1**
(45) Veröffentlichungstag und Bekanntmachung des Hinweises auf die Patenterteilung: **07.01.1998**
(21) Anmeldenummer: 95116432.6
(22) Anmeldetag: 18.10.1995
(51) Int. Cl.: H02K 21/04, H02K 21/14

(54) **Synchronmaschine in Schenkelpolbauart**
Synchronous machine of the leg-pole type
Machine synchrone du type à jambe

(30) Priorität: 23.01.1995 EP 95100860; 23.01.1995 DE 29500985 U; 15.05.1995 DE 29507990 U
(43) Veröffentlichungstag der Anmeldung: 24.07.1996
(73) Patentinhaber: SIEMENS AKTIENGESELLSCHAFT, 80333 München (DE)
(72) Erfinder: Freise, Werner, Prof. Dr.-Ing., D-67663 Kaiserslautern (DE)

(56) Entgegenhaltungen:
- DE-C- 4 139 843
- GB-A- 2 062 977
- US-A- 4 445 062
- US-A- 5 306 977

## Beschreibung

Die Erfindung bezieht sich auf eine Synchronmaschine in Schenkelpolbauart gemäß Anspruch 1.

Eine Synchronmaschine in Schenkelpolart gemäß den Merkmalen a) - b) des Anspruchs 1 ist durch die DE 41 39 843 C1 bekannt; die Dauermagnete dienen im vorgenannten bekannten Fall zur Gewährleistung einer Grunderregung durch einen magnetischen Nebenschluß, derart daß die Grunderregung bei Bedarf durch die Erregerwicklungen verstärkt oder geschwächt werden kann. Die Dauermagnete sind quaderförmig ausgebildet und liegen tangential seitlich unmittelbar an den Schenkelpolen an und sind nach radial außen durch tangential übergreifende, an die Schenkelpole angeformte Stege fixiert.

Durch die US-A-5 306 977 ist weiterhin ein Wechselstromgenerator in Klauenpolbauart mit spulenerregten Rotor-Klauenpolen und zwischen diesen angeordneten tangential magnetisierten Dauermagneten mit einer solchen Magnetisierungsrichtung bekannt, daß ihre magnetischen Spannungen dem Streufluß zwischen den erregten Schenkelpolen entgegenwirkt. Zur besseren Kühlluftführung sind zwischen den tangentialen Seitenflächen der Dauermagnete und den benachbarten Seitenflächen der Klauenpole radiale Luftkanäle vorgesehen, die durch entsprechende Ausnehmungen in den Dauermagneten oder durch gesonderte, als Blechteil geformte, nicht magnetische Abstandshalter gebildet werden, die auch gleichzeitig der Halterung der Dauermagnete zwischen den Klauenpolen dienen; zur radialen Fliehkraftsicherung können gemäß einzelnen Ausführungsbeispielen die Dauermagnete selbst auch trapezförmig ausgebildet sein.

Durch die EP 0 394 528 B1 ist eine Synchronmaschine in Klauenpolart bekannt; zwischen den tangentialen Außenseitenflächen benachbarter Klauenpole sind dabei tangential magnetisierte Dauermagnete mit einer solchen tangentialen Magnetisierung eingesetzt, daß ihre magnetische Spannung derjenigen einer dort vorgesehenen ringförmigen Rotorerregerspule entgegenwirkt und dadurch der Streufluß zwischen den Klauenpolen K1 bzw.K2 vermieden und eine Verstärkung des über den Luftspalt in das Statorblechpaket ST übertretenden magnetischen Flusses erreicht wird. Zur Lagesicherung der Dauermagnete nach radial außen sind zwischen den tangentialen Außenseitenflächen benachbarter Klauenpole jeweils gesonderte Klemmbleche eingedrückt.

Die erfindungsgemäßen Zwischenstücke erleichtern das Einbringen der Rotor-Erregerwicklung und geben in vorteilhafter Weise die Möglichkeit, besonders einfache quaderförmige Magnete zu verwenden, wenn die Zwischenstücke keilförmig ausgebildet und die Zwischenstücke mit Seitenanlage ihrer keilförmig verlaufenden umfangsseitigen Außenseitenflächen an den entsprechend keilförmig verlaufenden Außenseitenflächen der Polschuhe der Schenkelpole anliegen und wenn die, dann zweckmäßigerweise als lamellierte formgestanzte Blechpaketteile ausgebildeten, Zwischenstücke an ihren anderen, an den Dauermagneten anliegenden umfangsseitigen Außenseitenflächen radial außenseitig mit angeformten Haltenasen zur formschlüssigen radialen Sicherung der Dauermagnete versehen sind.

Die Zwischenstücke sind nach einer Ausgestaltung der Erfindung gleichzeitig als Feld-Konzentratoren für das Magnetfeld ausgebildet. Die Erregerspulen können sogar als vorgefertigte Wickeleinheit ohne Schwierigkeit von radial außen zugeführt werden, wenn die Zwischenstücke selbst als Polschuhe ausgebildet und entsprechend relativ zu den seitlich anliegenden Polschäften keilartig nach radial außen lagefixierbar sind und erst nach dem Einbringen der Wickeleinheit montiert werden; vorteilhafte Ausgestaltungen der Erfindung sind jeweils Gegenstand weiterer Unteransprüche.

Eine zusätzliche Lagesicherung in axialer Richtung bzw. auch gegebenenfalls nach radial innen kann z.B. durch einfaches Kleben, insbesondere mit der Tränkung der Rotorwicklung, erfolgen, da in den letztgenannten Richtungen keine stärkeren Kräfte auf die Dauermagnete einwirken; bei stärkeren axialen Kräften ist nach einer Ausgestaltung der Erfindung ein formschlüssiger axialer Anschlag durch einen umlaufenden, stirnseitig am Rotorblechpaket befestigten unmagnetischen Sicherungsring vorgesehen.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1,2: in axialer Stirnansicht als Ausschnitt aus dem Rotor einer Schenkelpol-Synchronmaschine verschiedene Ausführungsvarianten einer erfindungsgemäß formschlüssigen Dauermagnet-Lagefixierung;
- FIG 3: in axialer Längsansicht einen Ausschnitt aus einem Rotor einer Schenkelpol-Synchronmaschine mit zusätzlicher Sicherung der Dauermagnete bzw. Zwischenstücke durch einen unmagnetischen Sicherungsring.

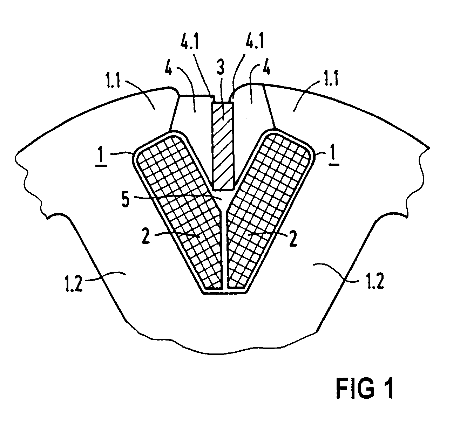

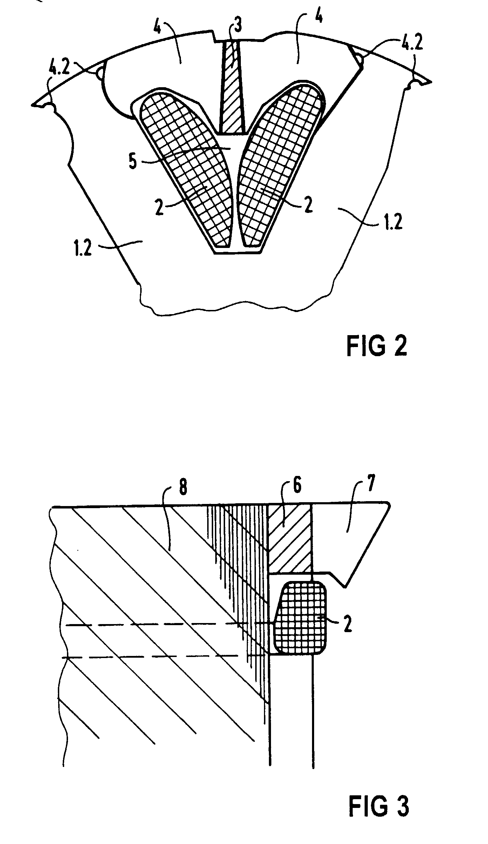

FIG 1,2 zeigen jeweils in axialer Stirnansicht an einem rotorseitigen Ausschnitt einer Schenkelpol-Synchronmaschine eine formschlüssige Lagesicherung der Dauermagnete 3 relativ zu den Schenkelpolen durch keilartige Aufnahmen, derart daß die Dauermagnete 3 unter dem Einfluß ihrer Magnetkräfte bzw. der auf sie betriebsmäßig einwirkenden Fliehkräfte sich von selbst zwischen den benachbarten, mit Erregerwicklungsspulen versehenen Schenkelpolen 1 bzw. Schenkelpolschäften 1.2 festsetzen und nur gegen axiales bzw. nach innen radiales Herausrutschen oder Verkanten mit Hilfe von Klebern oder mechanischen Schikanen gesichert werden müssen.

FIG 1 zeigt eine erfindungsgemäße mittelbare formschlüssige Fixierung des Dauermagneten 3 zwischen den tangentialen Seitenflächen zweier benachbarter Polschuhe 1.1 durch tangential beidseitigen Einsatz von Zwischenstücken 4, die als getrennte Bauteile einsetzbar sind und somit in vorteilhafter Weise die Einbringung der Erregerwicklung 2 in den Zwischenraum 5 zwischen den Polschäften 1.2 zweier benachbarter Pole 1 erleichtern. Nach einer Ausgestaltung der Erfindung sind die Zwischenstücke 4 zusätzlich als Feld-Konzentratoren für das Magnetfeld der Dauermagnete 3 ausgebildet.

Eine besonders einfache quaderförmige Bauform für die Dauermagnete kann trotz der erfindungsgemäßen keilartig formschlüssigen Selbstsicherung über die Zwischenstücke dadurch erreicht werden, daß an die, vorzugsweise als Blechpaketteile mit formgestanzten Blechlamellen ausgeführten, tangential außen keilartigen Zwischenstücke 4 radial außen vorstehende Haltenasen 4.1 angebracht, insbesondere angestanzt, sind, gegen welche die quaderförmigen Dauermagnete 3 aufgrund der betriebsmäßigen Fliehkräfte bzw. ihrer Magnetkräfte zur Anlage kommen. Die keilartige formschlüssige Sicherung und Festklemmung erfolgt dann mittels der sich nach radial außen keilartig verjüngenden Außenumfangsflächen der Zwischenstücke 4 einerseits bzw. der gegenliegenden Außenumfangsfläche der Polschuhe 1.1 der Schenkelpole 1 andererseits.

FIG 2 zeigt in weiterer vorteilhafter Ausgestaltung der Erfindung eine Ausführung, bei der die Zwischenstücke 4;4 die Größe und Funktion von Polschuhen aufweisen und außenseitig durch keilartig wirkende Anlagen an die entsprechend radial ausgedehnten Polschäfte 1.2 nach radial außen formschlüssig gesichert sind.

Die radial inneren Enden der Zwischenstücke ragen bis in den Zwischenraum zwischen den Außenkonturen zweier in Umfangsrichtung benachbarten Erregerwicklungen 2;2, wodurch in vorteilhafter Weise eine unerwünscht hohe Induktion am Übergang zwischen den Polschäften 1.2;1.2 und den anliegenden Zwischenstücken 4;4 vermieden werden kann.

Nach einer Ausgestaltung der Erfindung ist die trennende Anlagefläche zwischen Polschaft 1.2 einerseits und Zwischenstück 4 andererseits dazu benutzt, um in Nähe des rotoraußenumfangsseitigen Luftspaltes in der gegenseitigen Anlage axiale Pol-Luftspalte 4.2 vorzusehen, durch die der magnetische Widerstand für das tangential durch den Polschuh 1.1 jeweils verlaufende Querfeld des Statorstroms beeinflußbar ist.

Insbesondere bei Rotorbauarten größerer axialer Länge sind die Zwischenstücke 4 bzw. die Dauermagnete 3 aus Teilstücken zusammengesetzt, deren Länge einer Teillänge der axialen Gesamtlänge der Schenkelpole 1 entspricht.

Zweckmäßigerweise werden zur einfacheren Fertigung der erfindungsgemäßen Synchronmaschine die Dauermagnete 3 und Zwischenstücke 4 erst nach dem Wickeln der Erregerwicklung 2 bzw. Einbringen einer entsprechenden vorgefertigten Wicklungseinheit, jedoch vor deren Tränkung eingesetzt, so daß eine zusätzliche Verklebung der Dauermagnete 3 bzw. der Zwischenstücke 4 mit den Schenkelpolen 1 des Rotors im Sinne einer axialen und u.U. nach innen radialen Lage- und Verkantungssicherung allein durch anschließendes Tränkungs-Verkleben gewährleistet ist.

Eine zusätzliche axiale Sicherung der Zwischenstücke 4;4 bzw. Dauermagnete 3 ist gemäß FIG 3 nach einer weiteren Ausgestaltung der Erfindung durch einen an der Stirnseite des Rotorblechpaketes 8 entsprechend angeordneten unmagnetischen Sicherungsring 6 möglich, der gleichzeitig die Wickelköpfe der Erregerwicklung gegen Fliehkraftbelastungen radial sichern kann, zur Halterung von Lüfterflügeln 7 mitbenutzt werden kann und als Mittel für ein Negativwuchten dienen kann.

## Patentansprüche

1. Synchronmaschine in Schenkelpolbauart mit folgenden Merkmalen:
a) Der Rotor weist eine Vielzahl von über den luftspaltseitigen Umfang verteilten Schenkelpolen (1) wechselnder Polarität auf;
b) die Schenkelpole (1) sind durch zumindest eine Erregerspule (2) erregt;
c) zwischen den Schenkelpolen (1) sind radial oberhalb der Erregerspule (2) tangential magnetisierte Dauermagnete (3) mit einer solchen Magnetisierungsrichtung angeordnet, daß ihre magnetische Spannung dem Streufluß zwischen den erregten Schenkelpolen (1) entgegenwirkt bzw. deren magnetisches Feld im Luftspalt unterstützt;
d) die Dauermagnete (3) sind mittelbar jeweils über seitliche Zwischenstücke (4;4) durch keilartige Aufnahmen relativ zu den Schenkelpolen (1) unter dem Einfluß ihrer Magnetkräfte bzw. der auf sie betriebsmäßig einwirkenden Fliehkräfte nach radial außen formschlüssig festsetzbar.

2. Synchronmaschine nach Anspruch 1 mit dem Merkmal:
e) Die Dauermagnete (3) sind über die seitlichen Zwischenstücke (4;4) zwischen den tangentialen Außenseitenflächen der Polschuhe (1.1) der Schenkelpole (1) lagefixierbar.

3. Synchronmaschine nach Anspruch 1 mit dem Merkmal:
f) Die Zwischenstücke (4;4) sind jeweils als zwischen seitlichen, nach radial außen formschlüssig lagefixierenden Teilen der Polschäfte (1.2) einsetzbare Polschuhe (1.1) derart ausgebildet, daß die Erregerwicklung (2), insbesondere als vorgefertigte Wickeleinheit, vor dem Einsetzen der Zwischenstücke (4;4) und des Dauermagneten (3) den Polschäften (1.2) von radial außen zuführbar ist.

4. Synchronmaschine nach Anspruch 3 mit dem Merkmal:
g) Die Polschäfte (1.2) erstrecken sich radial bis zum luftspaltseitigen Außenumfang des Rotors.

5. Synchronmaschine nach zumindest einem der Ansprüche 1-4 mit dem Merkmal:
h) Die Zwischenstücke (4;4) erstrecken sich nach radial innen bis in den Zwischenraum zwischen den Außenkonturen zweier in Umfangsrichtung benachbarter Erregerwicklungen (2;2).

6. Synchronmaschine nach zumindest einem der Ansprüche 1-5 mit dem Merkmal:
i) Im Bereich der Anlage zwischen den Polschäften (1.2) und den Zwischenstücken (4;4) sind, insbesondere in Nähe des außenrotorseitigen Luftspalts, axial verlaufende Pol-Luftspalte (4.2) vorgesehen.

7. Synchronmaschine nach zumindest einem der Ansprüche 1-6 mit dem Merkmal:
j) Die Dauermagnete (3) sind im wesentlichen quaderförmig ausgebildet und formschlüssig zwischen den Zwischenstücken (4;4) fixierbar;
k) die Zwischenstücke (4;4) sind mit Seitenanlage ihrer keilartig verlaufenden tangentialen Außenseitenflächen an die entsprechend keilartig verlaufenden tangentialen Außenseitenflachen der Polschuhe (1.1) bzw. der Polschäfte (1.2) der Schenkelpole (1) fixierbar.

8. Synchronmaschine nach zumindest einem der Ansprüche 3-8 mit dem Merkmal:
l) Die Dauermagente (3) sind im wesentlichen keilartig ausgebildet und mit ihren Schrägseiten an entsprechend keilartig verlaufende Außenseitenflachen der Zwischenstücke (4;4) festsetzbar;
m) die Zwischenstücke (4;4) sind mit Seitenanlage ihrer keilartig verlaufenden tangentialen Außenseitenflächen der Polschuhe (1.1) bzw. der Polschäfte (1.2) der Schenkelpole (1) fixierbar.

9. Synchronmaschine nach Anspruch 8 mit dem Merkmal:
n) Die Zwischenstücke (4;4) sind mit angeformten querstehenden Haltenasen (4.1;4.1) zur formschlüssigen radialen Sicherung der, vorzugsweise quaderförmig ausgebildeten, Dauermagnete (3) zwischen den Zwischenstücken (4;4) versehen.

10. Synchronmaschine nach zumindest einem der Ansprüche 1-9 mit dem Merkmal:
o) Die Zwischenstücke (4;4) sind als Feld-Konzentratoren für das Magnetfeld der Dauermagnete (3) ausgebildet.

11. Synchronmaschine nach zumindest einem der Ansprüche 3-10 mit dem Merkmal:
p) Die Zwischenstücke (4;4) sind als lamellierte formgestanzte Blechpaketteile ausgebildet.

12. Synchronmaschine nach zumindest einem der Ansprüche 1-11 mit dem Merkmal:
q) Die Zwischenstücke (4;4) bzw. die Dauermagnete (3) sind zusammengesetzt aus Teilstücken mit einer axialen Teillänge der axialen Gesamtlänge der Schenkelpole (1).

13. Synchronmaschine nach zumindest einem der Ansprüche 1-12 mit dem Merkmal:
r) Die Dauermagnete (3) bzw. Zwischenstücke (4) sind untereinander bzw. mit den Schenkelpolen (1) mittels rotorseitiger Wicklungstränkungsmittel verklebt.

14. Synchronmaschine nach zumindest einem der Ansprüche 1-13, insbesondere nach Anspruch 16, mit dem Merkmal:
s) Am Rotorblechpaket ist jeweils stirnseitig ein radial oberhalb der Erregerwicklung (2) bzw. axial vor den Dauermagneten (3) bzw. den Zwischenstücken (4;4) sich erstreckender unmagnetischer Sicherungsring (6) befestigt.

## Claims

1. Synchronous machine of the salient-pole type having the following features:
a) the rotor has a multiplicity of salient poles (1) which are distributed around the circumference on the air-gap side and are of alternating polarity;
b) the salient poles (1) are excited by at least one field coil (2);
c) tangentially magnetized permanent magnets (3) are arranged radially above the field coil (2) between the salient poles (1) and their magnetization direction is such that their magnetic potential counteracts the stray flux between the excited salient poles (1) and assists their magnetic field in the air gap;
d) the permanent magnets (3) can be fixed indirectly radially outwards in a positively locked manner, in each case indirectly via lateral intermediate pieces (4; 4) by wedge-like holders relative to the salient poles (1) under the influence of their magnetic forces and the centrifugal forces which act on them during operation.

2. Synchronous machine according to Claim 1 having the feature:
e) the permanent magnets (3) can be fixed in position via the lateral intermediate pieces (4; 4) between the tangential outside surfaces of the pole shoes (1.1) of the salient poles (1).

3. Synchronous machine according to Claim 1, having the feature:
f) the intermediate pieces (4; 4) are in each case designed as pole shoes (1.1) which can be inserted between lateral parts of the pole shafts (1.2) which are fixed in position radially outwards in a positively locking manner, such that the field winding (2), in particular as a prefabricated winding unit, can be fed to the pole shafts (1.2) radially from the outside, before the insertion of the intermediate pieces (4;4) and of the permanent magnet (3).

4. Synchronous machine according to Claim 3, having the feature:
g) the pole shafts (1.2) extend radially as far as the outer circumference of the rotor on the air-gap side.

5. Synchronous machine according to at least one of Claims 1-4 having the feature:
h) the intermediate pieces (4; 4) extend radially inwards into the intermediate space between the outer contours of two field windings (2; 2) which are adjacent in the circumferential direction.

6. Synchronous machine according to at least one of Claims 1-5 having the feature:
i) axially running pole air gaps (4.2) are provided in the region of the contact between the pole shafts (1.2) and the intermediate pieces (4; 4), in particular in the vicinity of the air gap on the outside of the rotor.

7. Synchronous machine according to at least one of Claims 1 - 6 having the feature:
j) the permanent magnets (3) are designed essentially in a cuboid shape and can be fixed in a positively locking manner between the intermediate pieces (4; 4);
k) the intermediate pieces (4; 4) can be fixed such that their tangential outside surfaces, which have a wedge-like profile, make side contact against the tangential outside surfaces, which have a corresponding wedge-like profile, of the pole shoes (1.1) and the pole shafts (1.2) of the salient poles (1).

8. Synchronous machine according to at least one of Claims 3 - 8 having the feature:
l) the permanent magnets (3) are designed essentially like wedges and can be fixed by their oblique sides against outside surfaces, which have a corresponding wedge-like profile, of the intermediate pieces (4;4);
m) the intermediate pieces (4; 4) can be fixed such that their tangential outside surfaces, which have a wedge-like profile, make side contact against the pole shoes (1.1) and the pole shafts (1.2) of the salient poles (1).

9. Synchronous machine according to Claim 8 having the feature:
n) the intermediate pieces (4; 4) are provided with integrally formed transverse retaining tabs (4.1; 4.1) for positively locking radial securing of the permanent magnets (3), which are preferably designed in a cuboid shape, between the intermediate pieces (4; 4).

10. Synchronous machine according to at least one of Claims 1 - 9 having the feature:
o) the intermediate pieces (4; 4) are designed as field concentrators for the magnetic field of the permanent magnets (3).

11. Synchronous machine according to at least one of Claims 3 - 10 having the feature:
p) the intermediate pieces (4; 4) are designed as laminated sheet-metal core parts stamped to shape.

12. Synchronous machine according to at least one of Claims 1 - 11 having the feature:
q) the intermediate pieces (4; 4) and the permanent magnets (3) are composed of sub-pieces having an axial partial length equal to the axial total length of the salient poles (1).

13. Synchronous machine according to at least one of Claims 1 - 12 having the feature:
r) the permanent magnets (3) and the intermediate pieces (4) are bonded to one another and, respectively, to the salient poles (1) by means of winding impregnation means on the rotor side.

14. Synchronous machine according to at least one of Claims 1 - 13, in particular according to Claim 16, having the feature:
s) a non magnetic locking ring (6), which extends radially above the field winding (2) and axially in front of the permanent magnets (3) and the intermediate pieces (4; 4), is mounted on each of the ends of the laminated rotor core.

## Revendications

1. Machine synchrone du type à pôles saillants, présentant les caractéristiques suivantes :
a) le rotor comporte une multiplicité de pôles saillants (1) à polarités alternées, répartis sur le pourtour situé côté entrefer ;
b) les pôles saillants (1) sont excités par l'intermédiaire d'au moins une bobine excitatrice (2) ;
c) des aimants permanents (3) à magnétisation tangentielle sont placés entre les pôles saillants (1), radialement au-dessus de la bobine excitatrice (2), avec une direction de magnétisation telle que leur tension magnétique aille à l'encontre du flux de dispersion entre les pôles saillants (1) excités, ou renforce le champ magnétique de ces derniers dans l'entrefer ;
d) les aimants permanents (3) peuvent être indirectement bloqués par concordance de formes vis-à-vis des pôles saillants (1), extérieurement dans le sens radial, au moyen d'organes latéraux intercalaires respectifs (4 ; 4) et grâce à des logements de type cunéiforme, sous l'influence respective de leurs forces magnétiques ou des forces centrifuges qui leur sont appliquées en service.

2. Machine synchrone selon la revendication 1, présentant la caractéristique suivante :
e) les aimants permanents (3) peuvent être consignés à demeure, par l'intermédiaire des organes latéraux intercalaires (4 ; 4), entre les surfaces latérales tangentielles extérieures des pièces polaires (1.1) des pôles saillants (1).

3. Machine synchrone selon la revendication 1, présentant la caractéristique suivante :
f) les organes intercalaires (4 ; 4) sont réalisés, à chaque fois, sous la forme de pièces polaires (1.1) insérables entre des parties latérales des corps polaires (1.2) assurant une consignation à demeure par concordance de formes, vers l'extérieur dans le sens radial, de telle sorte que l'enroulement excitateur (2) puisse être amené radialement de l'extérieur aux corps polaires (1.2), notamment en tant qu'ensemble bobiné préfabriqué, avant l'insertion des organes intercalaires (4 ; 4) et de l'aimant permanent (3).

4. Machine synchrone selon la revendication 3, présentant la caractéristique suivante :
g) les corps polaires (1.2) s'étendent, radialement, jusqu'au pourtour extérieur du rotor qui est situé du côté de l'entrefer.

5. Machine synchrone selon au moins l'une des revendications 1-4, présentant la caractéristique suivante :
h) les organes intercalaires (4 ; 4) s'étendent radialement, vers l'intérieur, jusque dans l'intervalle entre les contours extérieurs de deux enroulements excitateurs (2;2) voisins dans le sens périphérique.

6. Machine synchrone selon au moins l'une des revendications 1-5, présentant la caractéristique suivante :
i) des entrefers polaires (4.2), s'étendant axialement, sont prévus dans la zone de contact entre les corps polaires (1.2) et les organes intercalaires (4 ; 4), notamment à proximité de l'entrefer situé du côté externe du rotor.

7. Machine synchrone selon au moins l'une des revendications 1-6, présentant la caractéristique suivante :
j) les aimants permanents (3) sont de réalisation pour l'essentiel parallélépipédique et peuvent être assujettis, par concordance de formes, entre les organes intercalaires (4; 4) ;
k) les organes intercalaires (4 ; 4) peuvent être assujettis par contact latéral de leurs surfaces latérales externes tangentielles, s'étendant à la manière de coins, avec les surfaces latérales externes tangentielles des pièces polaires (1.1) ou des corps polaires (1.2) des pôles saillants (1), dotées d'une allure cunéiforme correspondante.

8. Machine synchrone selon au moins l'une des revendications 3-7, présentant la caractéristique suivante :
I) les aimants permanents (3) sont réalisés, pour l'essentiel, à la manière de coins et peuvent être bloqués, par leurs côtés inclinés, sur des surfaces latérales externes des organes intercalaires (4 ; 4) dotées d'une allure cunéiforme correspondante ;
m) les organes intercalaires (4 ; 4) peuvent être assujettis par contact latéral de leurs surfaces latérales externes tangentielles, s'étendant à la manière de coins, des pièces polaires (1.1) ou des corps polaires (1.2) des pôles saillants (1).

9. Machine synchrone selon la revendication 8, présentant la caractéristique suivante :
n) les organes intercalaires (4 ; 4) sont munis de mentonnets solidaires de retenue (4.1 ; 4.1) dépassant transversalement, en vue de l'arrêt radial par concordance de formes, entre les organes intercalaires (4 ; 4), des aimants permanents (3) de réalisation préférentiellement parallélépipédique.

10. Machine synchrone selon au moins l'une des revendications 1-9, présentant la caractéristique suivante :
o) les organes intercalaires (4 ; 4) sont réalisés en tant qu'éléments de concentration du champ magnétique des aimants permanents (3).

11. Machine synchrone selon au moins l'une des revendications 3-10, présentant la caractéristique suivante :
p) les organes intercalaires (4 ; 4) sont réalisés sous la forme de pièces feuilletées en tôle, venues de matriçage et pourvues de lamelles.

12. Machine synchrone selon au moins l'une des revendications 1-11, présentant la caractéristique suivante :
q) les organes intercalaires (4 ; 4) ou les aimants permanents (3) sont respectivement composés de pièces partielles d'une longueur axiale représentant une partie de la longueur axiale totale des pôles saillants (1).

13. Machine synchrone selon au moins l'une des revendications i12, présentant la caractéristique suivante :
r) les aimants permanents (3) ou les organes intercalaires (4) sont respectivement collés les uns aux autres, ou aux pôles saillants (1), à l'aide de moyens d'imprégnation d'enroulement situés du côté rotor.

14. Machine synchrone selon au moins l'une des revendications 1-13, notamment selon la revendication 13, présentant la caractéristique suivante :
s) une bague d'arrêt amagnétique (6), respectivement fixée à la face frontale de l'empilement de tôles rotoriques, s'étend radialement au-dessus de l'enroulement excitateur (2) ou, axialement, devant les aimants permanents (3) ou les organes intercalaires (4 ; 4).
